# EUROPÄISCHE PATENTSCHRIFT

(11) **EP 2 492 145 B1**
(45) Veröffentlichungstag und Bekanntmachung des Hinweises auf die Patenterteilung: **02.04.2014**
(21) Anmeldenummer: 11400016.9
(22) Anmeldetag: 23.02.2011
(51) Int. Cl.: B60R 1/072

(54) **Verstellbarer Aussenrückblickspiegel**
Adjustable external rear view mirror
Rétroviseur extérieur réglable

(43) Veröffentlichungstag der Anmeldung: 29.08.2012
(73) Patentinhaber: SMR Patents S.à.r.l., 1653 Luxembourg (LU); AUDI AG, 85045 Ingolstadt (DE)
(72) Erfinder: Schmierer, Arne, 73230 Kirchheim (DE); Weidenhiller, Christoph, 85080 Gaimersheim (DE)
(74) Vertreter: Weber-Bruls, Dorothée

(56) Entgegenhaltungen:
- EP-A1- 2 165 886
- EP-A2- 1 300 289
- US-A- 5 473 476
- US-A1- 2001 015 862

## Beschreibung

Die Erfindung bezieht sich auf einen Außenrückblickspiegel.

### Stand der Technik

Außenrückblickspiegel an Fahrzeugen werden prinzipiell an zwei unterschiedlichen Anbauorten des Fahrzeuges angebracht. Ein Abbauort ist das Spiegeldreieck am Fahrzeug, das aus einer Seitenwand des Fahrzeugs nahe oder an der A-Säule besteht. Ein solcher Außenrückblickspiegel wird mit seinem Spiegelfuß, der sich im Allgemeinen zur Anbaufläche des Fahrzeugs flächig verbreitet, am Fahrzeug angeschraubt.

Ein weiterer Anbauort ist die Fahrzeugtür, wobei der Außenrückblickspiegel auf der Türbrüstung befestigt wird. Der Spiegelfuß des Türbrüstungsspiegels ist dabei zylindrisch aufgebaut und wird unter Verwendung von Verstärkungen an und innerhalb der Tür mit dieser verschraubt.

Die bekannten Außenspiegelanordnungen weisen gegen die Spiegelfüße drehbar gelagerte Spiegelköpfe auf, die im Fall einer Krafteinwirkung abklappen können. Zusätzlich zu dieser Sicherheitsfunktion des Abklappens werden zunehmend Abklappantriebe eingesetzt, um die Position des Spiegelkopfes in einen Parkstellung zu verdrehen. Dabei wird der Spiegelkopf soweit es die Karosserie des Fahrzeugs erlaubt an der Fahrzeug angeklappt.

Da der Sichtbereich des Spiegels auf alle Fahrerpositionen einstellbar sein muss, ist das im Spiegelkopf montierte Spiegelglas einstellbar gelagert. Über eine einfache mechanische Verstellung per Hand hinaus kann das Spiegelglas von Glasverstellern eingestellt werden. Dabei handelt sich entweder um zwei getrennte Motoren, die zwei Verstellantriebe antreiben oder um einen integrierten Glasversteller, der zwei Verstellelemente im 90[deg.] Winkel zueinander angeordnet, antreibt. Damit das Spiegelglas einstellbar ist, muss es gegenüber dem Gehäuse des Spiegelkopfes beweglich gelagert sein.

Zum Verschwenken des Spiegelglases im Spiegelkopf muss ein Spalt zwischen den Bauteilen vorhanden sein. Dieser Spalt sorgt für eine erhöhte Geräuschentwicklung des Außenrückblickspiegels, und für Verwirbelungen der Luft mit eventuell auftretenden Verschmutzungen des Spiegels. Zudem muss im Design des Außenrückblickspiegels darauf geachtet werden, dass das Spiegelglas in einer extremen Verstellposition nicht übersteht oder die überstehenden Ränder keine scharfen Kanten und den Mindestradius aufweisen.

Es ist das Ziel der Erfindung einen Spiegel vorzusehen, der zur Einstellung des Sichtwinkels nicht das Spiegelglas gegen das Spiegelgehäuse verdreht, sondern durch Verdrehung des Spiegelkopfes gegen den Spiegelfuß sowohl die Einstellung des Spiegelglases als auch eine Abklappbewegung realisiert.

Das Prinzip des starren Spiegels in einem Gehäuse ist aus den Anfangszeiten des Automobils bekannt. Der Spiegelkopf saß dabei auf einem Kugelgelenk und wurde mit Hand in die richtige Position gedreht.

Die EP 2 165 886 A1 betrifft einen Außenrückblickspiegel, bei dem ein Spiegelgehäuse samt daran befestigtem reflektierenden Element durch mindestens 3 Elemente gegen ein Fahrzeug beweglich ist, die getrennt verlängert werden können.

Die Erfindung stellt eine elektrische Antriebslösung des Problems dar, wobei gleichzeitig kommerziell erhältliche Glasverstellantriebe in einer erfinderischen Weise eingesetzt werden, um die gewünschte Bewegung zu erzielen. Vorteilhafterweise wird über die erfindungsgemäße Lösung ein Antrieb, nämlich der Abklappantrieb eingespart. Dadurch lässt sich der Spiegel kostengünstiger herstellen. Ein weiterer Vorteil ergibt sich aus den reduzierten aerodynamischen Forderungen, da keine Schlitze zwischen Spiegelglas und Gehäuse mehr vorhanden sind.
Durch die Verwendung von konventionellen Glasverstellantrieben wird der Antrieb des erfindungsgemäßen Spiegels stark vereinfacht.

Durch die Verwendung eines einstückigen Bauteils aus Spiegelfuß und Spiegelträger wird die Anzahl der Bauteile reduziert obwohl die Komfortlösung der elektrischen Verstellung erhalten bleibt.

### Beschreibung der Erfindung

Mit den Figuren und der nachfolgenden Beschreibung wird der Gegenstand der Erfindung anhand von Beispielen eines Türbrüstungsspiegels näher erläutert.
Figur 1 zeigt einen Türbrüstungsspiegel im Stand der Technik
Figur 2 zeigt denselben Spiegel in einem Schnitt senkrecht zum ersten Schnitt
Figur 3 a bis b zeigt eine erste erfindungsgemäße Lösung
Figur 4, 5 und 6 zeigen eine Sicht auf eine erfindungsgemäße Lösung ohne Gehäuse
Figur 7 und 8 zeigen einen Spiegelfuß
Fig. 9 zeigt schematisch eine zweite erfindungsgemäße Lösung

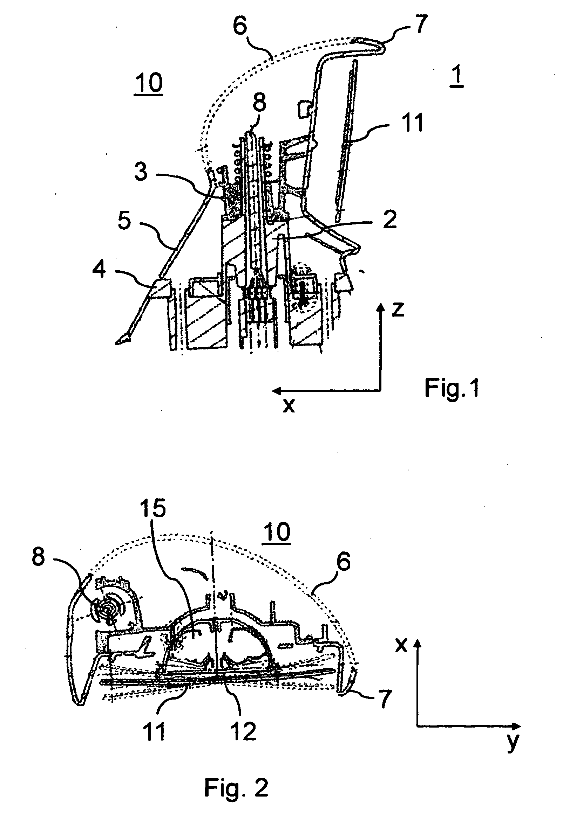

Figur 1 zeigt ein Schnittbild durch die x-z Ebene in Fahrzeugkoordinaten, wobei x die Fahrzeuglängsachse darstellt. Der Außenrückblickspiegel 1 besteht aus einem Spiegelfuß 2, der mit einem Spiegelträger 3 drehbar verbunden ist. Der Spiegelkopf 10 ist dabei um die Achse 8 verschwenkbar, sodass der Spiegelkopf in einer Parkstellung in Richtung Fahrzeug angeklappt werden kann. In Fall von Figur 1 ist ein elektrischer Antrieb für die Abklappbewegung vorgesehen. Der Spiegelfuß 2 sowie der Spiegelträger 3 sind mit Kunststoffabdeckungen verkleidet. Im Bereich des Spiegelfußes verbirgt eine Spiegelfußabdeckung 5 den technischen Aufbau, der Spiegelträger 3 wird von einer Gehäusekappe 6 und einem Gehäuserahmen 7 verdeckt. Die mechanische Anbindung an die Fahrzeugaußenkontur 4 wird nicht näher beschrieben. Da der Längsschnitt der Figur 1 durch die Achse des Spiegelfuß verläuft, ist der Glasverstellantrieb nicht sichtbar.

In Figur 2 wird der Spiegelkopf aus Figur 1 in einem Schnitt entlang der y-Achse gezeigt. Links ist die Drehachse 8 zu erkennen, um die sich der Spiegelkopf 10 dreht. Der Spiegelträger 3 ist mit dem Gehäuserahmen 7 und der Gehäusekappe 6 starr verbunden und nimmt bei seiner Bewegung gegen den Spiegelfuß mit der Spiegelfußabdeckung diese Gehäuseelemente mit. Auf dem Spiegelträger wird ein kommerzieller Glasverstellantrieb 15 angebracht. Diese Antrieb beispielsweise ein Antrieb wie er aus der EP 2017127 bekannt ist, besitzen eine halbschalenförmiges Gehäuse und ein dazu verschenkbaren Drehteller 12, der im Allgemeinen eine plane Anlagefläche zur Anbindung des Spiegelglases 11 aufweist.
Das Spiegelglas 11 wird in einer Glasträgerplatte 16 gefasst oder von einer solchen hinterlegt auf den Glasverstellantrieb installiert und kann so von zwei Verstellelemente des Glasverstellantriebs über den Drehteller 12 in die gewünschte Position verschwenkt werden. Die Installation des Glases auf der Glasträgerplatte 16 ist aus Gründen des Splitterschutzes angebracht.

In Figur 2 sind unterschiedlichen Positionen des Spiegelglases 11 skizziert. Das Spiegelglas bewegt sich relativ zum Gehäuserahmen 7 und dem gesamten Spiegelkopf 10, während der Spiegelkopf 10 mit Spiegelträger, Gehäuseelementen und Glasverstellantrieb 15 in seiner Position verbleibt. Zum Anklappen des Spiegelkopfs muss der getrennt installierte und an der Position im Spiegelfuß sitzende Abklappantrieb einsetzt werden.

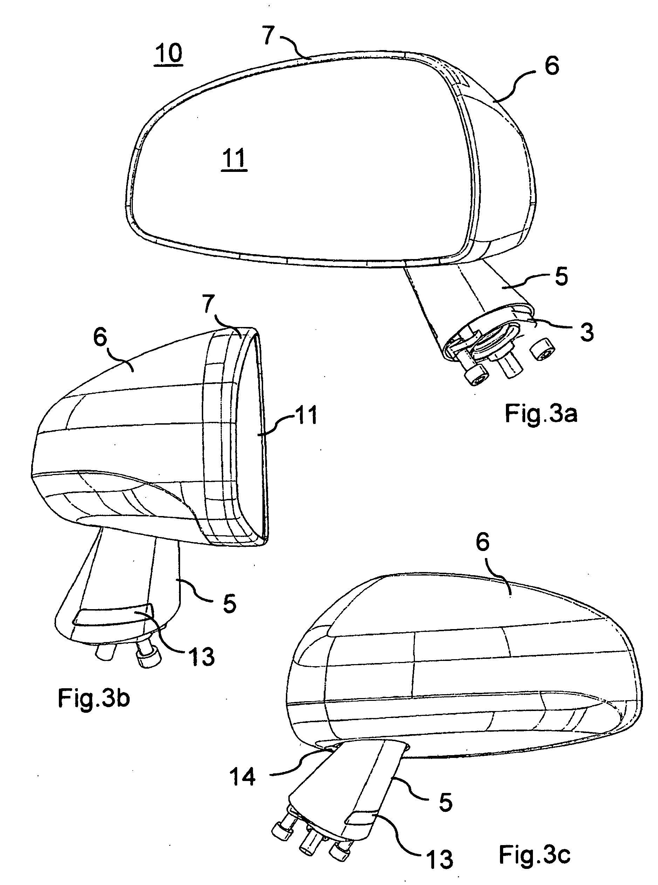

Die Figuren 3 a bis c zeigen Ansichten der erfindungsgemäßen Lösung. Das Spiegelglas 11 ist ohne einen Spalt zwischen Glas und Gehäuse direkt im Spiegelkopf installiert. Das Spiegelglas 11 ist dabei nicht gegen die Gehäuseelemente schwenkbar. Das Spiegelglas 11 muss in dieser Ausführungsform nicht von einem Spiegelglasträger eingefasst oder unterlegt sein. Der Splitterschutz kann auch durch das einfache Aufbringen einer Klebefolie gewährleitet werden. Der Spiegelkopf 10 sitzt auf einem Spiegelfuß 2 auf. Die Gehäuseabdeckungen der Spiegelkopfes sind entweder mehrteilig aufgebaut mit Gehäuserahmen 7 und Gehäusekappe 6 oder bestehen aus einem einzigen Bauteil. Der Spiegelfuß 2 ist mit einer Spiegelfußabdeckung 5 versehen. In einer Ausführungsform weist die Spiegelfußabdeckung 5 einen Aussparung 13 auf, in die die Lichtscheibe einer Beleuchtung, wie einer Umfeldleuchte, einer Positionsleuchte, einer Warnanzeige oder eines Blinkers integriert werden kann.

Die Gehäusekappe 6 weist einen Öffnung 14 auf, die für den Durchtritt des Spiegelfußes mit der Spiegelfußabdeckung 5 dient. Durch die erfindungsgemäße Bewegung muss die Öffnung 14 grösser als der Durchmesser der Spiegelfußabdeckung 5 sein. Der Spiegelkopf 10 bewegt sich gegen den Spiegelfuß, so dass je nach Verstellwegen des Spiegelkopfes die Öffnung 14 angepasst sein muss. Da durch die Öffnung 14 Spritzwasser in den Spiegelkopf eindringen könnte ist in einer alternativen Ausführungsform vorgesehen, die Öffnung um die Spiegelfußabdeckung mit einer flexiblen Membran zu verschließen.

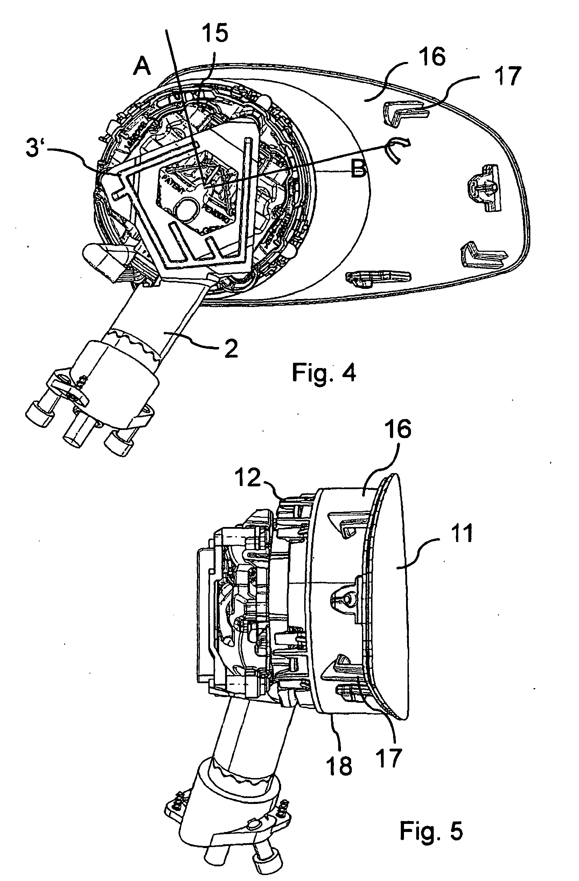

In Figur 4 und 5 wird der erfindungsgemäße Spiegelaufbau ohne Gehäuseabdeckungen dargestellt. Der Spiegelfuß 2 ist einstückig mit dem Spiegelträger 3' verbunden. Auf den Spiegelträger 3' ist der Glasverstellantrieb 15 fest installiert. Der Glasverstellantrieb 15 ist auch in diesem Beispiel ein kommerzieller Antrieb mit halbkugeligem Gehäuse und einem planen Drehteller 12. Dieser Drehteller 12 wird vom Antrieb gegen das halbkugelige Gehäuse verdreht. Auf dem Drehteller 12 wird ein Spiegelglasträger 16 montiert, der das Spiegelglas 11 trägt.

Der Spiegelglasträger 16 ist in der erfindungsgemäßen Lösung nicht nur einen flache Platte, sondern ist als Platte mit angeschlossener Halterung 18 gestaltet. Die Halterung 18 überwindet dabei den Abstand zwischen Drehteller 12 des Glasverstellantriebs und der Spiegelglasebene mit dem Spiegelglas 11.

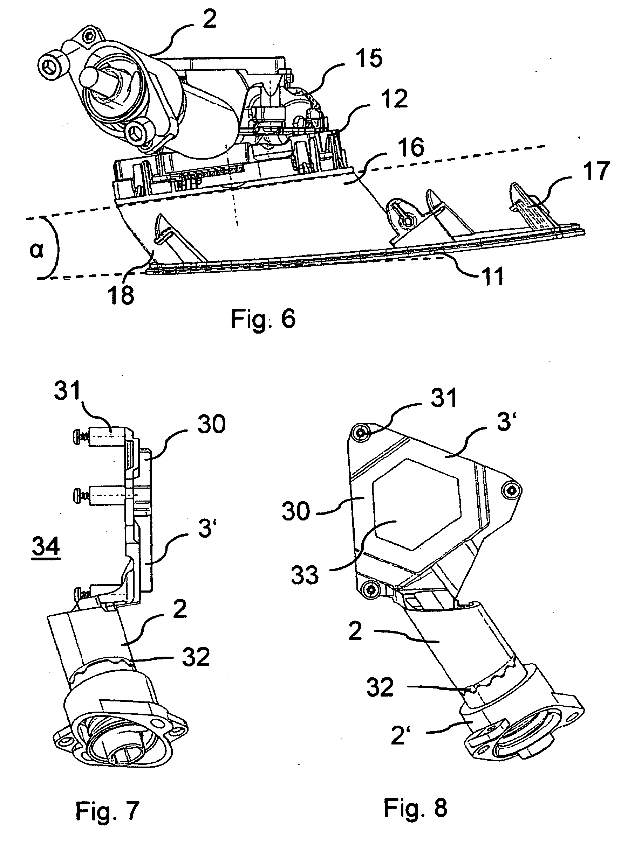

In Figur 6 ist dargestellt, dass die Halterung 18 keinen parallelen Aufbau zwischen Drehteller 12 des Glasverstellantriebs und dem Spiegelglas 11 aufweist. Der Drehteller 12 ist gegen die Spiegeloberfläche um einen spitzen Winkel alpha geneigt. Dazu ist die Halterung als Hohlzylinder ausgelegt, dessen Endflächen unter unterschiedlichen Winkeln geschnitten sind.

Der Spiegelglasträger 16 besitzt entlang des äußeren Randes des Spiegelglases Klipsen 17. Diese Klipse 17 werden von Gegenstücken in der Gehäuseabdeckung 6 aufgenommen und dienen zur Verbindung mit den Gehäuseabdeckungselementen des Spiegelkopfes wie der Gehäusekappe 6 und/ oder dem Gehäuserahmen 7. Es kommt dabei nicht darauf an, ob die Gehäuseabdeckung ein- oder mehrteilig gestaltet ist.

Mit den Klipsen wird die Gehäuseabdeckung starr mit dem Spiegelglasträger 16 und dem Drehteller 12 des Glasverstellantriebs verbunden.

Wird der Glasverstellantrieb aktiviert und mindesten eines der Verstellelemente angesteuert, verdreht sich der Drehteller 12 des Glasverstellantriebs 15 gegen sein halbkugelförmiges Gehäuse und den Spiegelträger 3'. Mit dem Drehteller 12 verdreht sich der gesamte Aufbau bestehend aus Spiegelglasträger 16, Spiegelglas 11 und Gehäuseabdeckung 6 gegen den Spiegelträger 3' und damit gegen den Spiegelfuß 2.

Figuren 7 und 8 zeigen den Spiegelfuß 2 mit Spiegelträger 3' als einteiliges Bauelement. In diesem Ausführungsbeispiel wird der Spiegelfuß 2 mit Spiegelträger 3' aus Metallguss einstückig hergestellt. Es ist aber auch möglich, andere Werkstoff wie faserverstärkter Kunststoff oder andere spezielle Kunststoffe zu verwenden. Der Spiegelträger und der Spiegelfuß können auch mehrstückig hergestellt und danach starr miteinander verbunden werden. So dient das Befestigungelement 2' zur mechanischen Anbindung an das Fahrzeug, ist aber im Gebrauchsfall starr mit dem Spiegelfuß 2 verbunden. Es kommt nur darauf an, dass zwischen Spiegelfuß 2 und Spiegelträger 3' keine Bewegung möglich ist.

Der Spiegelfuß 2 ist dabei als Hohlzylinder ausgebildet, um die Durchführung einer elektrischen Verbindung zu ermöglichen. Der Spiegelfuß kann ein- oder mehrteilig gestaltet werden. In Figur 7 und 8 wird der Spiegelfuß 2 mehrteilig aufgebaut und weist eine Entrastungslinie 32 auf, die den Hohlzylinder 2 mit dem am Fahrzeug zu befestigten Befestigungselement 2' verbindet. Die Entrastungslinie 32 ist dabei für den Notfall vorgesehen und ermöglicht es, dass der Spiegel im Falle eines Aufpralls an dieser Stelle abbricht. Es versteht sich, dass der Spiegelfußaufbau im Gebrauchsfall als starr betrachtet wird und die Entrastungslinie nicht als Bewegungsmöglichkeit für den Gebrauch gesehen wird.

Der Spiegelfuß 2 mündet in den Spiegelträger 3', der beispielhaft als dreieckige Platte 30 gestaltete wurde. Die Trägerplatte 30 besitzt Stege 31, die als Schraubdome zur Befestigung des Glasverstellantriebs vorgesehen sind. Um das halbkugelförmige Gehäuse des Glasverstellantriebs aufnehmen zu können, besitzt die Trägerplatte 30 eine mittige Ausnehmung 33. Das halbkugelförmige Gehäuse des Glasverstellantriebs sitzt dann in dieser Ausnehmung 33 und erstreckt sich in den Raum 34 zwischen den Stegen 31.

Zur starren Befestigung des Glasverstellantriebs kann aber auch jede andere Methode wie Verklipsen, Verpressen, Verschweißen usw. gewählt werden.

Das Verstellen des Spiegelglases durch Verstellen des gesamten Spiegelkopfes gegen den Spiegelfuß und der Spiegelfußabdeckung findet statt, indem die beiden Motoren des Glasverstellantriebs Verstellelement unterschiedlich weit auslenken und so den Drehteller 12 mit dem Spiegelträger 16 und dem Spiegelglas 11 bewegen.

In Figur 4 sind die Drehachsen des Glasverstellantriebs mit A und B eingezeichnet. Eine Bewegung um die B-Achse regelt die Position ungefähr um die Horizontale, einen Bewegung um die A-Achse bewegt den Spiegelkopf nahe der Vertikalen zum oder vom Fahrzeug weg. Diese Bewegung wird in einem bevorzugten Ausführungsbeispiel asymmetrisch ausgeführt. Da die kommerziellen Glasverstellantriebe in der Auslenkung limitiert sind und es der Wunsch ist , den Spiegelkopf in einer Parkstellung näher an die Fahrzeugaußenkontur anzulegen, ist die Spiegelglasträgerplatte 16 nach Figur 6 mit dem Winkel alpha angekeilt. Dadurch wird die äußere Kante des Spiegelkopfes um einen größeren Winkel verschwenkbar als es im Verstellweg des Glasverstellantriebs bei parallelem Aufbau möglich wäre.

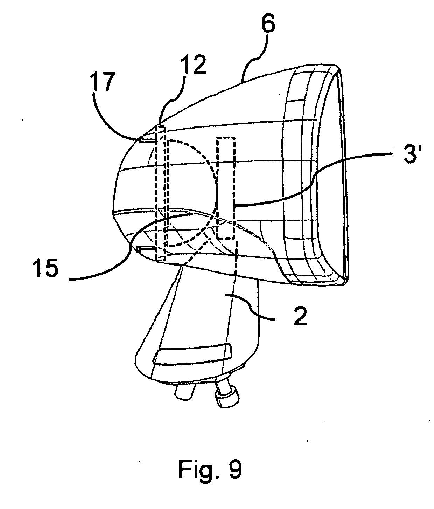

Fig. 9 zeigt einen alternativen Aufbau der Spiegeleinstellung. Der Glasverstellantrieb 15 wird dabei mit seiner Oberfläche 12 so eingebaut, dass die Oberfläche 12 in Richtung Gehäusekappe 6 zeigt. Der Drehteller 12 des Glasverstellantriebs 15 greift dabei entweder direkt oder über eine Verbindungsplatte 17 an die Gehäusekappe an, die starr mit dem Spiegelglas 11 verbunden ist.

Die elektrische Anbindung der Außenrückblickspiegels erfolgt über den hohlen Spiegelfuß 2. Die elektrischen Leitungen für den Glasverstellantrieb werden durchgeführt und direkt mit dem Antrieb verbunden. Wenn ein heizbares Spiegelglas eingesetzt ist, wird die Kontaktierung des Spiegelglases entweder über den Glasverstellmotor 15 direkt erreicht oder es werden in der Ausführungsform nach Figur 9 getrennte Kontakte mit einer eigenen elektrischen Zuleitung verlegt.

Die Erfindung ist nicht auf einen Türbrüstungsspiegel beschränkt, auch ein Außenrückblickspiegel, der am Spiegeldreieck des Fahrzeugs angebracht ist, kann mit der erfindungsgemäßen Lösung ausgestattet sein. Allerdings ist für die Abklappfunktion der Bewegungswinkel der Außenrückblickspiegelspitze größer als im Falle einer Türbrüstungsmontage.

Daher wird für den Einsatz in einem Außenrückblickspiegel am Spiegeldreieck der Verstellweg eines Verstellelements deutlich grösser um die Auslenkung zu erzielen, die man für das Anklappen an das Fahrzeug benötigt. In einem solchen Anwendungsfall wäre der Einsatz von konventionellen Glasverstellantrieben nicht sinnvoll, sondern man müsste getrennten Antrieb für die beiden Verstellachsen vorsehen, wobei die Verstellwege der Verstellelemente deutlich grösser sind.

## Patentansprüche

1. Außenrückblickspiegel mit einem Spiegelkopf (10) und einem Spiegelfuß (2), die mit mindestens einem Gehäuseelement in Form eines Gehäuserahmens (7), einer Gehäusekappe (6) und einer Spiegelfußabdeckung (5) verkleidet sind, und einem Spiegelglas (11), das starr relativ zum Spiegelkopf (10) installiert ist, wobei
der Spiegelkopf (10) auf dem Spiegelfuß (2) aufsitzt, der Gehäuseabdeckung des Spiegelkopfes (10) mehrteilig aus dem Gehäuserahmen (7) und der Gehäusekappe (6) aufgebaut ist,
und der Spiegelfuß (2) mit einer Spiegelfußabdeckung (5) versehen ist, wobei
die Gehäusekappe (6), eine Öffnung (14) aufweist, die für den Durchtritt des Spiegelfußes (2) mit der Spiegelfußabdeckung (5) dient, und
der Spiegelfuß (2) starr mit einem Spiegelträger (3') verbunden ist, der mindestens einen elektrischen Glasverstellantrieb (15) trägt, wobei der mindestens eine Glasverstellantrieb (15) mit dem mindestens einem Gehäuseelement verbunden ist.

2. Außenrückblickspiegel nach Anspruch 1, **dadurch gekennzeichnet, dass** der Spiegelfuß (2) und der Spiegelträger (3') einstückig ausgebildet sind.

3. Außenrückblickspiegel nach Anspruch 1, **dadurch gekennzeichnet, dass** der Spiegelfuß (2) eine Entrastungslinie (32) aufweist.

4. Außenrückblickspiegel nach Anspruch 1, **dadurch gekennzeichnet, dass** der Spiegelfuß (2) mehrstückig ausgebildet ist und die Bauteile für den normalen Gebrauch starr verbunden sind.

5. Außenrückblickspiegel nach Anspruch 1, **dadurch gekennzeichnet, dass** die Spiegelfußabdeckung (5) eine Aussparung (13) für einen Leuchte aufweist.

6. Außenrückblickspiegel nach Anspruch 1, **dadurch gekennzeichnet, dass** der Spiegelträger (3') eine Ausnehmung (33) zur Aufnahme des Glasverstellantriebs (15) aufweist.

7. Außenrückblickspiegel nach Anspruch 1, **dadurch gekennzeichnet, dass** der Spiegelträger (3') Vorrichtungen (31) zur Befestigung des Glasverstellantriebs (15) aufweist.

8. Außenrückblickspiegel nach Anspruch 1, **dadurch gekennzeichnet, dass** ein Spiegelglasträger (16) eine Halterung (18) aufweist, die einen Winkel Alpha zwischen den Glasverstellantrieb (15) und dem Spiegelglas (11) erzeugt.

9. Außenrückblickspiegel nach Anspruch 1, **dadurch gekennzeichnet, dass** der Glasverstellantrieb (15) zwei senkrecht zueinander stehende Achsen (A, B) aufweist, die horizontal und vertikal ausgerichtet sind.

10. Außenrückblickspiegel nach Anspruch 1, **dadurch gekennzeichnet, dass** der Glasverstellantrieb (15) zwei senkrecht zueinander stehende Achsen (A,B) aufweist, die von der Horizontalen und Vertikalen abweichen.

11. Außenrückblickspiegel nach Anspruch 1, **dadurch gekennzeichnet, dass** der Glasverstellantrieb (15) zwei nicht senkrecht zueinander stehende Achsen (A, B) aufweist.

12. Außenrückblickspiegel nach Anspruch 1, **dadurch gekennzeichnet, dass** der Spiegelglasträger (16) Vorrichtungen (17) zur starren Befestigung mindestens eines Gehäuseelements (6,7) des Spiegelkopfes aufweist.

13. Außenrückblickspiegel nach Anspruch 1, **dadurch gekennzeichnet, dass** der Drehteller (12) des Glasverstellantriebs Vorrichtungen (17) zur starren Befestigung mindestens eines Gehäuseelements (6,7) des Spiegelkopfes aufweist.

## Claims

1. An external rearview mirror with a mirror head (10) and a mirror base (2), which are covered with at least one body element in the form of a body frame (7), a body cap (6), and a mirror base cover (5), and a mirror glass (11) that is installed rigidly relative to the mirror head (10), wherein the mirror head (10) rests on the mirror base (2), the body cover of the mirror head (10) is composed in multiple pieces of the body frame (7) and the body cap (6),
and the mirror base (2) is equipped with a mirror base cover (5), wherein the body cap (6) has an opening (14) designed for the passage of the mirror base (2) and the mirror base cover (5), and
the mirror base (2) is rigidly connected to a mirror carrier (3') that carries an electrical glass adjustment drive (15), wherein the glass adjustment drive (15) is connected to at least one body element.

2. The external rearview mirror according to claim 1, **characterized in that** the mirror base (2) and the mirror carrier (3') are designed in one piece.

3. The external rearview mirror according to claim 1, **characterized in that** the mirror base (2) comprises an unlocking line (32).

4. The external rearview mirror according to claim 1, **characterized in that** the mirror base (2) is designed in multiple pieces and its components are rigidly interconnected for regular use.

5. The external rearview mirror according to claim 1, **characterized in that** the mirror base cover (5) comprises a recess (13) for a lamp.

6. The external rearview mirror according to claim 1, **characterized in that** the mirror carrier (3') comprises a recess (33) for holding a glass adjustment drive (15).

7. The external rearview mirror according to claim 1, **characterized in that** the mirror carrier (3') comprises devices (31) for fastening the glass adjustment drive (15).

8. The external rearview mirror according to claim 1, **characterized in that** a mirror glass carrier (16) comprises a bracket (18) that creates an angle alpha between the glass adjustment drive (15) and the mirror glass (11).

9. The external rearview mirror according to claim 1, **characterized in that** the glass adjustment drive (15) comprises two axes (A, B) perpendicular to each other that extend in the horizontal and the vertical directions.

10. The external rearview mirror according to claim 1, **characterized in that** the glass adjustment drive (15) comprises two axes (A, B) perpendicular to each other that deviate from the horizontal and the vertical directions.

11. The external rearview mirror according to claim 1, **characterized in that** the glass adjustment drive (15) comprises two axes (A, B) that are not perpendicular to each other.

12. The external rearview mirror according to claim 1, **characterized in that** the mirror glass carrier (16') comprises devices (17) for rigid fastening of at least one body element (6, 7) of the mirror head.

13. The external rearview mirror according to claim 1, **characterized in that** the turntable (12) of the glass adjustment drive comprises devices (17) for rigid fastening of at least one body element (6, 7) of the mirror head.

## Revendications

1. Rétroviseur extérieur ayant une tête rétroviseur (10) et un pied de rétroviseur (2), qui sont recouverts d'au moins un élément de boîtier ayant la forme d'un cadre de boîtier (7), d'un chapeau de boîtier (6) et d'un recouvrement de pied de rétroviseur (5), et un miroir de rétroviseur (11), qui est installé de manière rigide par rapport à la tête rétroviseur (10), dans lequel
la tête de rétroviseur (10) est posée sur le pied de rétroviseur (2), le recouvrement de boîtier de la tête de rétroviseur (10) est monté en plusieurs parties sur le cadre de boîtier (7) et le chapeau de boîtier (6),
et le pied de rétroviseur (2) est muni d'un recouvrement de pied de rétroviseur (5), dans lequel
le chapeau de boîtier (6) présente une ouverture (14), qui permet au pied de rétroviseur (2) de traverser le recouvrement de pied de rétroviseur (5), et
le pied de rétroviseur (2) est relié de manière rigide à un support de rétroviseur (3'), qui porte au moins un dispositif de réglage de miroir électrique (15), dans lequel le au moins dispositif de réglage de miroir électrique (15) est raccordé au au moins un élément de boîtier.

2. Rétroviseur selon la revendication 1, **caractérisé en ce que** le pied de rétroviseur (2) et le support de rétroviseur (3') sont formés en un seul bloc.

3. Rétroviseur selon la revendication 1, **caractérisé en ce que** le pied de rétroviseur (2) présente une ligne de désenclenchement (32).

4. Rétroviseur selon la revendication 1, **caractérisé en ce que** le pied de rétroviseur (2) est formé de plusieurs parties, et les composants pour l'utilisation normale sont reliés de manière rigide.

5. Rétroviseur selon la revendication 1, **caractérisé en ce que** le pied de rétroviseur (5) présente un orifice (13) pour une lampe.

6. Rétroviseur selon la revendication 1, **caractérisé en ce que** le support de rétroviseur (3') présente une cavité (33) pour la réception du dispositif de réglage de miroir électrique (15).

7. Rétroviseur selon la revendication 1, **caractérisé en ce que** le support de rétroviseur (3') présente des dispositifs (31) pour la fixation du dispositif de réglage de miroir électrique (15).

8. Rétroviseur selon la revendication 1, **caractérisé en ce qu'**un support de rétroviseur (16) présente un raccord (18), qui génère un angle alpha entre le dispositif de réglage de miroir électrique (15) et le miroir de rétroviseur (11).

9. Rétroviseur selon la revendication 1, **caractérisé en ce que** le dispositif de réglage de miroir électrique (15) présente deux axes (A, B) sensiblement perpendiculaires l'un par rapport à l'autre, qui sont orientés horizontalement et verticalement.

10. Rétroviseur selon la revendication 1, **caractérisé en ce que** le dispositif de réglage de miroir électrique (15) présente deux axes (A, B) sensiblement perpendiculaires l'un par rapport à l'autre, qui s'écartent de l'horizontale et de la verticale.

11. Rétroviseur selon la revendication 1, **caractérisé en ce que** le dispositif de réglage de miroir électrique (15) présente deux axes (A, B) qui ne sont pas perpendiculaires l'un par rapport à l'autre.

12. Rétroviseur selon la revendication 1, **caractérisé en ce que** le support de rétroviseur (16') présente des dispositifs (17) pour la fixation rigide d'au moins un élément de boîtier (6, 7) de la tête de rétroviseur.

13. Rétroviseur selon la revendication 1, **caractérisé en ce que** le plateau rotatif (12) du dispositif de réglage de miroir électrique (15) présente des dispositifs (17) pour la fixation rigide d'au moins un élément de boîtier (6, 7) de la tête de rétroviseur.
